# EUROPÄISCHE PATENTSCHRIFT

(11) **EP 1 327 111 B1**
(45) Veröffentlichungstag und Bekanntmachung des Hinweises auf die Patenterteilung: **14.04.2004**
(21) Anmeldenummer: 01973945.7
(22) Anmeldetag: 17.10.2001
(51) Int. Cl.: F24J 3/08

(54) **VERFAHREN UND ANLAGE ZUM AUSTAUSCH VON ERDENERGIE ZWISCHEN ERDKÖRPER UND EINEM ENERGIETAUSCHER, INSBESONDERE ZUR STROMERZEUGUNG**
METHOD AND SYSTEM FOR EXCHANGING EARTH ENERGY BETWEEN EARTHLY BODIES AND AN ENERGY EXCHANGER, ESPECIALLY TO PRODUCE AN ELECTRIC CURRENT
PROCEDE ET INSTALLATION POUR ECHANGER DE L'ENERGIE TERRESTRE ENTRE UN CORPS TERRESTRE ET UN ECHANGEUR D'ENERGIE, NOTAMMENT POUR PRODUIRE DU COURANT

(30) Priorität: 20.10.2000 CH 205800
(43) Veröffentlichungstag der Anmeldung: 16.07.2003
(73) Patentinhaber: Hita AG, 6318 Walchwil (CH)
(72) Erfinder: HILDEBRAND, Hans, CH-6318 Walchwil (CH)
(74) Vertreter: Schmauder, Klaus Dieter
(86) Internationale Anmeldenummer: PCT/CH2001/000621
(87) Internationale Veröffentlichungsnummer: WO 2002/033332

(56) Entgegenhaltungen:
- WO-A-01/04550
- DE-A- 2 631 552
- DE-A- 3 627 680
- US-A- 3 274 769
- US-A- 4 220 202
- US-A- 4 644 750
- US-A- 5 937 934

## Beschreibung

### Technisches Gebiet

Die Erfindung betrifft ein Verfahren gemäss Oberbegriff des Anspruches 1 und eine Anlage zur Durchführung des Verfahrens gemäss Oberbegriff des Anspruches 14.

### Stand der Technik

Da die Temperatur in der Erdkruste mit zunehmender Tiefe ansteigt, ist bei genügend tiefen Bohrungen mit einer Tiefe ab beispielsweise 2000 m die Erzeugung von heissem Wasserdampf möglich, mit welchem beispielsweise ein geothermisches Kraftwerk oder ein Fernwärmesystem betrieben werden kann. Ein derartiges Verfahren ist von beträchtlichem wirtschaftlichem Interesse. Beim sogenannten "Hot-Dry-Rock-Verfahren" (siehe beispielsweise Brockhaus Enzyklopädie, Bd. 8, 19. Aufl., F.A. Brockhaus GmbH, Mannheim, 1989, S. 337-338) wird die Tiefenwärme aus heissen trockenen Gesteinen genutzt, indem man zwei Bohrungen hinreichender Tiefe mit Abstand voneinander niederbringt, Wasser durch die eine Bohrung in künstlich aufgeweitete Klüfte hinabpresst und durch die andere als überhitztes Wasser oder als Dampf wieder an die Oberfläche pumpt. Am einfachsten zu betreiben sind geothermische Kraftwerke nach dem Trokkendampfprinzip, bei dem der überhitzte Dampf direkt auf die Turbinenschaufeln zum Antrieb von Generatoren geleitet werden kann. Wesentliche Nachteile des Hot-Dry-Rock-Verfahrens sind die Notwendigkeit von zwei getrennten Bohrlöchern, die künstliche Aufweitung von Klüften im Tiefengestein und das Erfordernis einer genügend heissen Felszone.

DE 2 631 552 offenbart eine Anlage mit einem einzigen Bohrloch für Vor- und Rückleitung und verlangt einen eingesprengten Hohlraum.

Anlagen zur Gewinnung von Erdenergie aus geringeren Tiefen als beim eingangs erwähnten Verfahren sind ebenfalls mehrfach bekannt. Solche Anlagen nutzen die Erdenergie in Tiefen von 100 bis 2000 m und tiefer, indem beispielsweise Kreislaufwasser aus der Rücklaufleitung eines Energietauschers durch eine poröse Füllung bis auf den Grund eines Bohrloches fliesst, sich dabei erwärmt und mittels einer Pumpe über die Vorlaufleitung wieder zum Energietauscher geführt wird. Die Gewinnung von heissem Wasserdampf ist mit Anlagen dieser Art allerdings nicht möglich.

### Darstellung der Erfindung

Aufgabe der Erfindung ist es, ein Verfahren und eine Anlage zur Gewinnung von heissem Wasserdampf aus dem Tiefengestein bereitzustellen, bei welchem die Nachteile der eingangs genannten Verfahren vermieden werden.

Die Aufgabe wird gelöst durch:
a) das Verfahren gemäss Anspruch 1; und
b) die Anlage gemäss Anspruch 14.

Dadurch, dass die Rücklaufrohre und das Trennrohr mit dem darin ausgebildeten Vorlaufrohr in einem einzigen Bohrloch untergebracht sind, ist die aufzuwendende Bohrarbeit im Vergleich zum Hot-Dry-Rock-Verfahren ungefähr auf die Hälfte reduziert. Da der Vorlaufbereich und der Rücklaufbereich im unteren Bereich des Bohrloches über eine oder mehrere Durchtrittsöffnungen im Trennrohr mit einander verbunden sind und schliesslich der untere Bereich des Rücklaufes eine poröse Füllung enthält, ist ein geschlossenes System möglich, bei dem praktisch kein Umgebungswasser eindringt und das im wesentlichen mit der eigenen, im Kreislauf geführten Wassermenge auskommt, wodurch sich eine Verschmutzung des Kreislaufsystems wesentlich verringert. Somit muss dem System praktisch kein Wasser zugeführt werden und es geht andererseits nach dem Anfahren praktisch kein Wasser an die Umgebung verloren, wodurch die Umweltbelastung wesentlich reduziert ist. Da auch von der Umgebung kein Wasser zugeführt werden muss, wird die Verschmutzung beziehungsweise Verschlammung des Erdenergietauschers vermieden. Ausserdem findet nach dem Anfahren der Anlage durch die wiederholte Verdampfung eine Entmineralisierung des Kreislaufwassers statt, wodurch die Gefahr von Korrosionsschäden in den Rohrleitungen wesentlich reduziert wird. Nach einer gewissen Betriebsdauer kann das Kreislaufwasser derart gereinigt sein, dass eine weitere Reinigung nur noch in grösseren Zeitabständen notwendig ist. Dies trägt weiter wesentlich zur Kostenreduktion und Betriebssicherheit bei.

In der Anlaufphase kann es zweckmässig sein, Frischwasser zuzuführen und das im System enthaltene und ausgepresste Kreislaufwasser in einem Auffangbecken zu sammeln und zu entmineralisieren. Ein weiterer Vorteil besteht darin, dass durch die poröse Füllung im Rücklaufbereich ein verbesserter Wärmeaustausch erreicht wird, so dass die Erzeugung von künstlichen Klüften im Tiefengestein nicht erforderlich ist. Noch ein weiterer Vorteil besteht darin, dass für die Anlage gemäss der vorliegenden Erfindung keine besonderen Anforderungen an die geologische Beschaffenheit gestellt werden, wodurch sich wiederum keine besonderen Einschränkungen bezüglich des Standortes einer solchen Anlage ergeben.

Vorteilhafte Ausgestaltungen des Verfahrens beschreiben die Ansprüche 2 bis 13 und vorteilhafte Ausgestaltungen der Anlage sind in den Ansprüchen 13 bis 35 beschrieben.

Im allgemeinen enthält der Erdenergietauscher vor der Inbetriebnahme Kreislaufwasser, beispielsweise Spülwasser oder aus dem Erdkörper eingedrungenes Wasser. Der im Vorlaufrohr bzw. in den Vorlaufrohren herrschende Wassersäulendruck verhindert eine Dampfentnahme aus dem Erdenergietauscher, solange der Wassersäulendruck im unteren Bereich des Vorlaufrohres bzw. der Vorlaufrohre höher als der Wasserdampfdruck ist.

Zum Anlaufen des Verfahrens kann nach Anspruch 2 mindestens eine Umwälzpumpe dienen, da bereits geringe Druckunterschiede genügen, um die Wassersäulen im Rücklauf und im Vorlauf in Bewegung zu versetzen, wodurch sich das Kreislaufwasser im Vorlauf zunehmend erwärmt und schliesslich in Dampferzeugung übergeht.

Zum Anlaufen des Verfahrens bzw. der Anlage kann gemäss den Anspruch 3 bis 9 die Wassersäule im Vorlaufrohr bzw. in den Vorlaufrohren mittels einer zuschaltbaren Druckmediumvorrichtung ausgepresst werden. Die daraufhin im unteren Bereich des Bohrloches einsetzende Dampfentwicklung treibt einen Kreislaufprozess an, bei welchem Kreislaufwasser vom Energietauscher über die Rücklaufleitung und das Rücklaufrohr bzw. die Rücklaufrohre in den unteren Bereich des Bohrloches fliesst, worauf der entstehende Wasserdampf über das Vorlaufrohr bzw. die Vorlaufrohre und die Vorlaufleitung zum Energietauscher gelangt und dort unter Abgabe von Energie in Kreislaufwasser zurückgeführt wird.

Das beim Anfahren einzubringende Druckmedium kann gemäss Anspruch 4 im oberen Bereich des Vorlaufrohres oder gemäss Anspruch 5 im oberen Bereich des Rücklaufrohres eingebracht werden. Vorteilhaft ist es, wenn das Druckmedium nach Anspruch 6 vorgewärmt eingebracht wird, um das Anlaufen der Anlage zu beschleunigen. Als Druckmedium kann man gemäss Anspruch 7 Druckluft verwenden. Vorteilhaft ist gemäss Anspruch 8 auch die Verwendung von Wasserdampf als Druckmedium, den man vorzugsweise durch Absenken eines Tauchsieders in das Vorlaufrohr gewinnt. Besonders vorteilhaft ist es nach Anspruch 9 als Druckmedium Wasser zu verwenden.

Grundsätzlich kann beim Anfahren der Anlage das aus dem Erdenergietauscher herauszupressende Kreislaufwasser durch geeignete Durchtrittsöffnungen dem Erdkörper zugeführt werden. Die damit verbundenen geologischen und ökologischen Nachteile können mit der Ausgestaltung nach Anspruch 10 vermieden werden. Insbesondere kann das abgelassene Kreislaufwasser aufgefangen, gereinigt und entmineralisert und erwünschtenfalls weiterverwendet werden.

Gute Verfahrensbedingungen erhält man, wenn man gemäss Anspruch 11 mit einer Temperatur des zurückfliessenden Kreislaufwassers von weniger als 100°C und vorzugsweise von 20° bis 30°C arbeitet. Die Vorlauftemperatur des Wasserdampfes am Energietauscher sollte gemäss Anspruch 12 mindestens 100°C, vorzugsweise 350° bis 370° betragen. Weitere vorteilhafte Bedingungen sind in Anspruch 13 umschrieben.

Die Anlage kann gemäss Anspruch 15 in der Rücklaufleitung und/oder in der Vorlaufleitung eine Umwälzpumpe enthalten, die insbesondere zum Anfahren der Anlage aber auch zur Unterstützung des Betriebes dienen kann.

Vorteilhaft ist auch das Anfahren der Anlage gemäss einer Ausgestaltung nach Anspruch 16 mittels Druckmedium. Die Anlage zur Erzeugung von Druckmedium kann nach Anspruch 17 als Druckpumpe ausgebildet sein. Besonders vorteilhaft ist eine Ausgestaltung gemäss Anspruch 18, wobei als Druckmediumvorrichtung ein Tauchsieder verwendet wird, der durch Absenken im Vorlaufrohr das Kreislaufwasser verdampft und so das Druckmedium erzeugt.

Das beim Anfahren des Verfahrens bzw. der Anlage aus dem Vorlaufrohr auszutreibende Kreislaufwasser wird gemäss Anspruch 19 durch geeignete Mittel oberhalb der Erdoberfläche abgelassen. Die Ansprüche 20 und 21 beschreiben geeignete Ablassmittel. Wie bereits oben erwähnt, besteht gemäss Anspruch 22 eine besonders bevorzugte Lösung darin, das auszutreibende Kreislaufwasser in einem Auffangbecken zu sammeln, um es von Schadstoffen zu befreien, was zu einer für die Umwelt bzw. die Anlage schonenden Lösung führt. Das aufgefangene und gereinigte Kreislaufwasser kann der Anlage gemäss Anspruch 23 wieder zugeführt werden.

Die Ausgestaltung gemäss Anspruch 24 ist zum Anfahren der Anlage besonders vorteilhaft. Nach Schliessen der Absperrventile in der Rücklauf- und Vorlaufleitung sowie des Absperrventils zwischen dem ersten Vorlaufrohr und den übrigen Vorlaufrohren wird durch Zuschalten der Druckmediumvorrichtung an das erste Vorlaufrohr das Kreislaufwasser zunächst in besagtem Vorlaufrohr nach unten gepresst, wobei ein entsprechendes Wasservolumen durch die übrigen Vorlaufrohre über das Ablassventil aus dem Rohrsystem ausgepresst wird. Nachdem das erste Vorlaufrohr derart entwässert ist, bewirkt der angelegte Gasdruck auch die Entwässerung der restlichen Vorlaufrohre. Anschliessend wird die Druckmediumvorrichtung abgeschaltet und der durch die Dampfkraft angetriebene Kreislaufprozess durch Schliessen des Ablassventils und Öffnen der Absperrventile in der Rücklauf- und Vorlaufleitung sowie des Absperrventils zwischen dem ersten Vorlaufrohr und den übrigen Vorlaufrohren in Gang gesetzt.

Die Ausgestaltung nach Anspruch 25 verringert Wärmeverluste im Vorlaufrohr und kann damit die Effizienz der Anlage erhöhen.

Grundsätzlich ist es denkbar, dass nur ein Rücklaufrohr im Rücklaufbereich angeordnet ist. Wesentlich bessere Ergebnisse lassen sich jedoch durch eine Ausbildung nach Anspruch 26 erzielen, da dann alle Bereiche des Bohrloches gleichmässig erfasst und zur Energiegewinnung ausgenutzt werden können. Die Anordnung mehrerer Rohre im Vorlauf und/oder Rücklauf hat den Vorteil, dass die Anlage in mehreren Geschwindigkeiten gefahren werden kann, je nach Zu- bzw, Abschalten einzelner Rohre.

Eine weitere Verbesserung der Effizienz wird durch die Ausgestaltung nach Anspruch 27 erreicht, indem der Wärmeaustausch zwischen dem Kreislaufwasser und dem Erdkörper im oberen Teil des Bohrloches, wo die Erdtemperatur tiefer als die Temperatur des Kreislaufwassers ist, verhindert wird, während im unteren Teil des Bohrloches, wo die Erdtemperatur höher als die Temperatur des Kreislaufwassers ist, ein gesteigerter Wärmeaustausch erzielt wird. Ausserdem wird dadurch das Eindringen von verschmutztem Wasser aus den oberen Erdschichten in das Bohrloch verhindert.

Besonders vorteilhaft ist eine Ausgestaltung der Anlage nach Anspruch 28, da durch das Vorhandensein von Durchtrittsöffnungen im unteren Bereich des Trennrohres und durch die in besagtem Bereich nicht ausgebildeten Vorlaufrohre ein verringerter Strömungswiderstand erreicht wird.

Die erforderliche Bohrlochtiefe hängt vom Temperaturverlauf in der Erdkruste ab. In Regionen ohne ausgeprägte geothermische Anomalien sind Bohrlochtiefen von beispielsweise 2500 bis 12000 m gemäss Anspruch 29 zweckmässig. Jedoch sind auch grössere Tiefen möglich.

Eine weitere Verbesserung des Wärmeaustausches zwischen dem Kreislaufwasser und dem Erdkörper wird durch die Ausbildung von seitlichen Ablenkungsbohrungen gemäss der Ausgestaltung nach Anspruch 30 erreicht. Solche Ablenkungsbohrungen können Sackbohrungen sein vorteilhafter sind jedoch durchgehende Bohrungen, die wieder in dem Bohrloch endigen. Dadurch kann die Wärme übertragende Fläche und damit die Leistung des Erdenergietauschers wesentlich erhöht werden. Verlaufen solche Ablenkbohrungen gemäss Anspruch 31 im wesentlichen in Richtung des Bohrloches, so sind sie einfacher zu erstellen. Bei der Anordnung radial zum Bohrloch gemäss Anspruch 32 befinden sich die Ablenkbohrungen in Zonen höherer Temperatur und ermöglichen so eine höhere Energie des Dampfes mit weniger Übertragungsfläche.

Der mit dem erzeugten Wasserdampf gespeiste Energietauscher kann gemäss Anspruch 33 ein direkter Energieverbraucher oder gemäss Anspruch 34 auch ein Wärmetauscher sein, der einen weiteren Kreislauf aufheizt. Letzteres ermöglicht insbesondere einen geschlossenen Kreislaufprozess, bei dem kein Druckabbau und damit kein Ausfallen etwaiger Mineralien im Kreislaufwasser stattfindet, wodurch einem Verschlammen der Anlage vorgebeugt werden kann. Besonders vorteilhaft ist die Ausgestaltung, mit welcher elektrischer Strom erzeugt wird. Eine solche Anlage lässt sich noch verbessern, wenn zusätzlich Heizwärme produziert wird, wodurch die Temperatur des zurückfliessenden Kreislaufwassers weiter abgesenkt und der Wirkungsgrad der Anlage erhöht wird. Zweckmässigerweise wird eine zum Antrieb eines Stromgenerators dienende Turbine nach Anspruch 35 im ORC-Prozess , das heisst Organic-Rankine-Cycles betrieben.

### Kurze Beschreibung der Zeichnungen

Ausführungsbeispiele der Erfindung werden nachfolgend anhand der Zeichnungen näher beschrieben, dabei zeigen:
- Figur 1:: eine Anlage in schematischer Darstellung im Vertikalschnitt;
- Figur 2:: das Rohrsystem einer Anlage in schematischer Darstellung im Horizontalschnitt II-II der Figur 1 und in grösserem Massstab;
- Figur 3:: das Rohrsystem einer Anlage in schematischer Darstellung im Horizontalschnitt III-III der Figur 1 und in grösserem Massstab;
- Figur 4:: eine abgewandelte Anlage in schematischer Darstellung im Vertikalschnitt;
- Figur 5:: ein abgewandeltes Leitungssystem der Anlage in Figur 4 in schematischer Darstellung im Vertikalschnitt;
- Figur 6:: ein Auffangbecken für Kreislaufwasser, in schematischer Darstellung und im Vertikalschnitt;
- Figur 7:: eine Druckmediumvorrichtung in schematischer Darstellung und im Vertikalschnitt;
- Figur 8:: eine Anlage mit Umwälzpumpen in schematischer Darstellung im Vertikalschnitt; und
- Figur 9:: ein Erdwärmetauscher mit radial verlaufenden Ablenkbohrungen im Ausschnitt und im Vertikalschnitt.

### Wege zur Ausführung der Erfindung

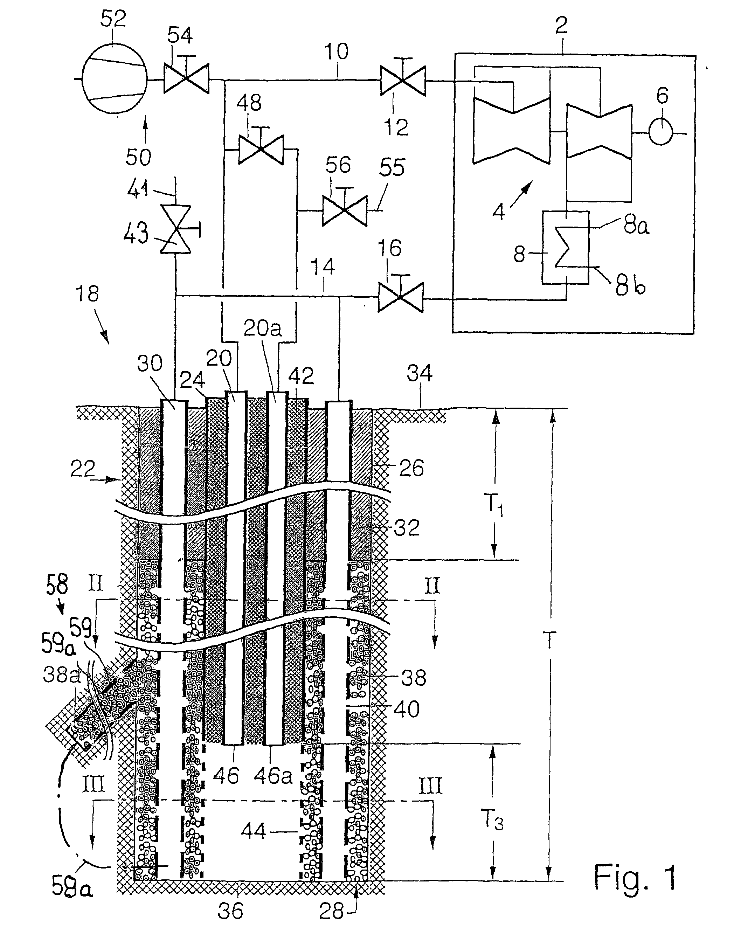

Die Figur 1 zeigt eine Anlage zur Nutzung der Erdenergie, beispielsweise zur Speisung eines Energietauschers 2. Der Energietauscher 2 besteht vorzugsweise aus einer mehrstufigen Turbine 4, die einen Stromgenerator 6 antreibt, und aus einem an die Ableitung der Turbine 4 angeschlossenen Energieverbraucher 8, welcher beispielsweise ein Heizwärmenetz darstellen kann. Der Energietauscher 2 ist über eine Vorlaufleitung 10 mit regulierbarem Absperrventil 12 sowie über eine Rücklaufleitung 14 mit regulierbarem Absperrventil 16 mit einem Erdenergietauscher 18 verbunden, der mindestens zwei wärmeisolierte Vorlaufrohre 20 und 20a in einem Bohrloch 22 enthält. Die Vorlaufrohre 20 und 20a sind von einem Trennrohr 24 umgeben, an das sich radial nach aussen bis zur Bohrlochwandung 26 ein Rücklaufbereich 28 anschliesst, in welchem Rücklaufrohre 30 angeordnet sind. Der die Rücklaufrohre 30 aufnehmende Bohrlochbereich ist im oberen Bereich 32 bis zu einem Abstand T₁ von vorzugsweise 2000 bis 2500 m unterhalb der Erdoberfläche 34 dichtend und im unteren Bereich bis zur Bohrlochsohle 36 mit einer porösen Füllung 38, beispielsweise mit Kies, versehen. Die Wandungen der Rücklaufrohre 30 weisen im Bereich der porösen Füllung 38 Durchtrittsöffnungen 40 für einen verbesserten Wärmeaustausch auf, da das Wasser und/oder der Dampf aus den Rücklaufrohren 30 in die poröse Füllung austreten, sich weiter erwärmen und in die Rücklaufrohre 30 zurückströmen kann. An die Rücklaufleitung 14 ist eine Zuleitung 41 mit einem Absperrventil 43 angeschlossen, um dem Kreislaufprozess im Bedarfsfalle, beispielsweise bei Versickerung oder Verdunstung von Kreislaufwasser, Wasser zuzusetzen.

Zur Erhöhung der Effizienz der Anlage ist der Bereich zwischen den Vorlaufrohren 20 bzw. 20a und dem Trennrohr 24 mit einem Isoliermaterial 42 ausgefüllt. Die Vorlaufrohre 20 und 20a endigen in einem Abstand T₃ von vorzugsweise 400 m oberhalb der Bohrlochsohle 36 und das Trennrohr 24 ist im darunterliegenden Bereich mit Durchtrittsöffnungen 44 versehen. Die Vorlaufrohre 20 und 20a kommunizieren im Bereich ihrer unteren Eintrittsöffnungen 46 und 46a miteinander.

An der Erdoberfläche 34 ist das erste Vorlaufrohr 20 mit der Vorlaufleitung 10 verbunden. Das zweite Vorlaufrohr 20a ist über ein regulierbares Absperrventil 48 mit der Vorlaufleitung 10 verbunden. Eine zuschaltbare Druckmediumvorrichtung 50 ist hier als Druckpumpenanlage ausgebildet und besteht aus mindestens einer Druckpumpe 52 und einem regulierbaren Anschlussventil 54. Diese Druckpumpenanlage ist mit der Vorlaufleitung 10 im Bereich zwischen dem ersten Vorlaufrohr 20 und dem Absperrventil 12 verbunden. Die Druckpumpe 52 ist als Hydraulikpumpe für vorzugsweise heisses Wasser oder gegebenenfalls als Kompressor für Druckluft ausgebildet. Eine Ablassleitung 55 mit einem Ablassventil 56 befindet sich im Bereich der Vorlaufleitung 10 zwischen dem zweiten Vorlaufrohr 20a und dem Absperrventil 48.

Vor der Inbetriebnahme der Anlage gemäss Figur 1 enthält der Erdenergietauscher 18 im allgemeinen Kreislaufwasser. Infolge der Verbindung zwischen den Rücklaufrohren 30 und den Vorlaufrohren 20 und 20a im unteren Bereich des Bohrloches 22 ist der Wasserspiegel in den Vorlaufrohren 20 und 20a im wesentlichen gleich hoch wie der Wasserspiegel in den Rücklaufrohren 30. Die in den Vorlaufrohren 20 und 20a und in den Rücklaufrohren 30 vorliegende Wassersäule verhindert eine Gewinnung von heissem Wasserdampf. Zum Anfahren der Anlage gemäss Figur 1 wird die zuschaltbare Druckpumpenanlage 50 durch Öffnen des Anschlussventils 54 an das erste Vorlaufrohr 20 zugeschaltet, wobei das Absperrventil 48 zwischen den Vorlaufrohren 20 und 20a und die Absperrventile 12 und 16 der Vorlaufleitung 10 und der Rücklaufleitung 14 geschlossen sind. Dadurch wird das alte Kreislaufwasser aus dem Vorlaufrohr 20 durch das zweite Vorlaufrohr 20a über das geöffnete Ablassventil 56 abgelassen. Nach erfolgtem Ersatz des alten Kreislaufwassers durch heisses Wasser oder nach dem Entwässern der Vorlaufrohre 20 und 20a durch Druckluft setzt im Erdenergietauscher 18 die Dampferzeugung ein. Die Druckpumpenanlage 50 wird durch Schliessen des Anschlussventils 54 vom Vorlauf abgetrennt, das Absperrventil 48 geöffnet und das Ablassventil 56 geschlossen. Durch Öffnen des Absperrventils 16 in der Rücklaufleitung 14 wird dem Erdenergietauscher 18 soviel Kreislaufwasser zugeführt, wie durch die Vorlaufleitung 10 nach Öffnen des Absperrventils 12 Dampf aus dem Erdenergietauscher 18 abgelassen wird. Damit wird ein durch die Dampfkraft angetriebener Kreislaufprozess in Gang gesetzt. Die Temperatur, der Druck und/oder die Menge des Wasserdampfes in der Vorlaufleitung 10 wird vorteilhafterweise mit dem regulierbaren Absperrventil 12 geregelt. Wenn viel Dampf entnommen wird so sinkt die Temperatur des Dampfes, wie umgekehrt die Temperatur des Dampfes steigt, wenn wenig Dampf entnommen wird.

Zur Verbesserung des Wärmeaustausches kann das Bohrloch 22 im Bereich unterhalb eines Abstandes T₁, der beispielsweise mindestens 500 m betragen kann, von der Erdoberfläche mit seitlichen Ablenkungsbohrungen 58 versehen sein, die - wie gezeigt - als Sackbohrungen oder - wie strichpunktiert angedeutet - vorzugsweise als Durchgangsbohrungen 58a ausgebildet sind. Sie enthalten ebenfalls ein Rohr 59 gegebenenfalls mit Löchern 59a in der Wandung und sind mit einer porösen Füllung 38a versehen. Solche Ablenkungsbohrungen 58a können bei 500 bis 4000 m von der Erdoberfläche aus beginnen und bei 2500 bis 12000 m wieder in das Bohrloch 22 münden und dienen zur Vergrösserung der Wärme übertragenden Flächen. Es kann nur eine solche Ablenkungsbohrung vorhanden sein, zweckmässigerweise sind mehrere um das Bohrloch verteilt angeordnete Ablenkungsbohrungen vorhanden.

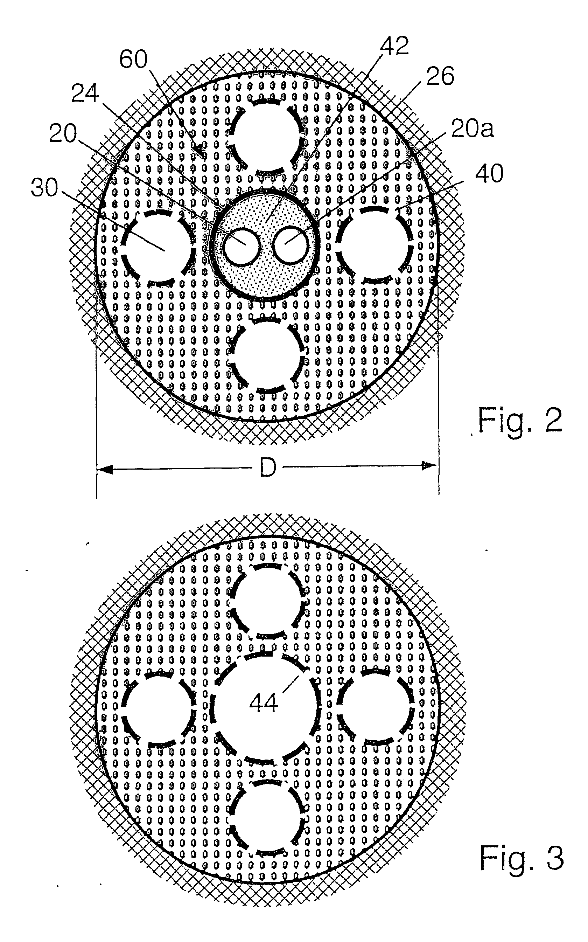

Die Figur 2 zeigt die Anlage gemäss Figur 1 in schematischer Darstellung im Horizontalschnitt II-II von Figur 1 bei einer Tiefe von beispielsweise 1000 bis 12000 m unterhalb der Erdoberfläche 34. Das Bohrloch weist einen Durchmesser D von beispielsweise 150 bis 500 mm auf. Der Bereich innerhalb des Trennrohres 24 zwischen den Vorlaufrohren 20 und 20a ist mittels Isoliermaterial 42 ausgefüllt. Im Ringbereich 60 des Bohrloches 22 zwischen dem Trennrohr 24 und der Bohrlochwand 26 sind beispielsweise vier über den Umfang verteilte Rücklaufrohre 30 angeordnet. Der Hohlraum des Ringbereiches 60 zwischen den Rücklaufrohren 30 ist mit einer porösen Füllung 38 ausgefüllt. Die Wandung der Rücklaufrohre 30 ist mit Durchtrittsöffnungen 40 versehen.

Die Figur 3 zeigt die Anlage gemäss Figur 1 in schematischer Darstellung im Horizontalschnitt III-III von Figur 1 in einem Tiefenbereich T₃ von beispielsweise bis 400 m oberhalb der Bohrlochsohle 36. Das Trennrohr 24 ist mit Durchtrittsöffnungen 44 versehen und frei von Vorlaufrohren und Isoliermaterial und dient als Sammelraum für den Wasserdampf.

Das Anlaufen der Anlage, das heisst die Dampferzeugung beginnt bei einer Temperatur von über 100°C. Die Betriebstemperatur für den Energietauscher 2 ist grösser als 100°C und beträgt vorzugsweise 350° bis 370°C in der Vorlaufleitung 10. In der mehrstufigen Dampfturbine 4 des Energietauschers 2 wird der Dampf auf weniger als 100°C abgekühlt und kondensiert zu Kreislaufwasser, das dem Energieverbraucher 8 beispielsweise einem Wärmetauscher zugeführt wird. In dem Wärmetauscher wird ein Vorlauf 8a eines Verbraucherkreislaufes auf etwa 90°C erwärmt, der nach Wärmeabgabe als Rücklauf 8b mit etwa 20°C zum Wärmetauscher zurückfliesst. Dies führt dazu, dass das Kreislaufwasser den Wärmetauscher 8 und damit den Energietauscher 2 mit einer Temperatur von etwa 25° bis 30°C verlässt und über die Rücklaufleitung 14 den Rücklaufrohren 30 zugeführt wird.

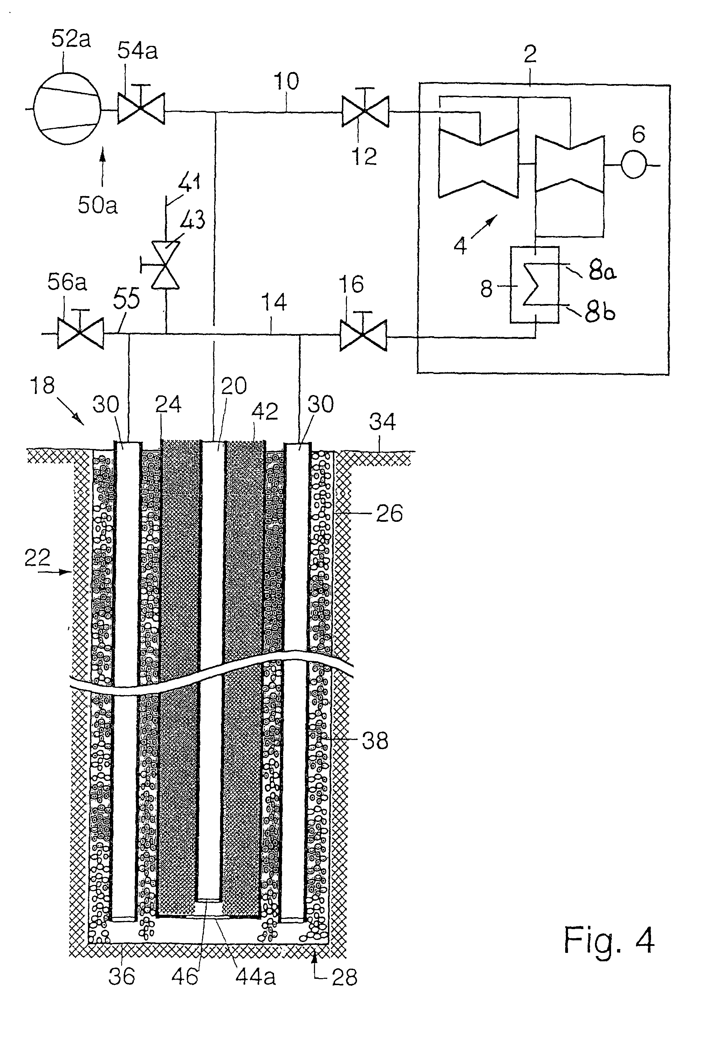

Die Figur 4 zeigt eine Anlage gemäss Figur 1, wobei jedoch nur ein Vorlaufrohr 20 ausgebildet ist. Der Rücklaufbereich 28 ist im unteren Bereich des Bohrloches 22 über eine oder mehrere Durchtrittsöffnungen 44a im Trennrohr 24 mit der unteren Eintrittsöffnung 46 des Vorlaufrohres 20 verbunden. Alternativ ist der gesamte untere Bereich des Bohrloches 22 wie in den Figuren 1 und 3 dargestellt, ausgebildet. Die Rücklaufrohre 30 sind zusammengeführt zur Rücklaufleitung 14, welche im Bereich zwischen dem Erdenergietauscher 18 und dem Absperrventil 16 vorzugsweise mit einem Ablassventil 56a zu einer Ablassleitung 55 versehen ist. Ferner ist an der Rücklaufleitung 14 eine Zuleitung 41 mit einem Absperrventil 43 zum Zuführen von Frischwasser oder Rückführwasser angeschlossen. Eine zuschaltbare Druckmediumvorrichtung 50a, die wiederum als Druckpumpenanlage bestehend aus mindestens einer Druckpumpe 52a und einem Anschlussventil 54a ausgebildet ist, ist mit der Vorlaufleitung 10 im Bereich zwischen dem Erdenergietauscher 18 und dem Absperrventil 12 verbunden.

Zum Anfahren der in Figur 4 gezeigten Anlage wird die Druckpumpenanlage 50a bei geschlossenem Absperrventil 12 der Vorlaufleitung 10 und geschlossenem Absperrventil 16 der Rücklaufleitung 14 durch Öffnen des Anschlussventils 54a zugeschaltet. Das Kreislaufwasser im Vorlaufrohr 20 wird nach unten gepresst und durch die Rücklaufrohre 30 über das Ablassventil 56a oberhalb der Erdoberfläche 34 abgelassen. Nach erfolgtem Entwässern des Vorlaufrohres 20 beziehungsweise Füllen mit warmem Wasser setzt im Erdenergietauscher 18 die Dampferzeugung ein. Die Druckpumpenanlage 50a wird durch Schliessen des Anschlussventils 54a von der Vorlaufleitung 10 getrennt und das Ablassventil 56a geschlossen. Durch Öffnen des Absperrventils 16 in der Rücklaufleitung 14 und des Absperrventils 12 in der Vorlaufleitung 10 wird der Kreislaufprozess durch die Dampfkraft in Gang gesetzt.

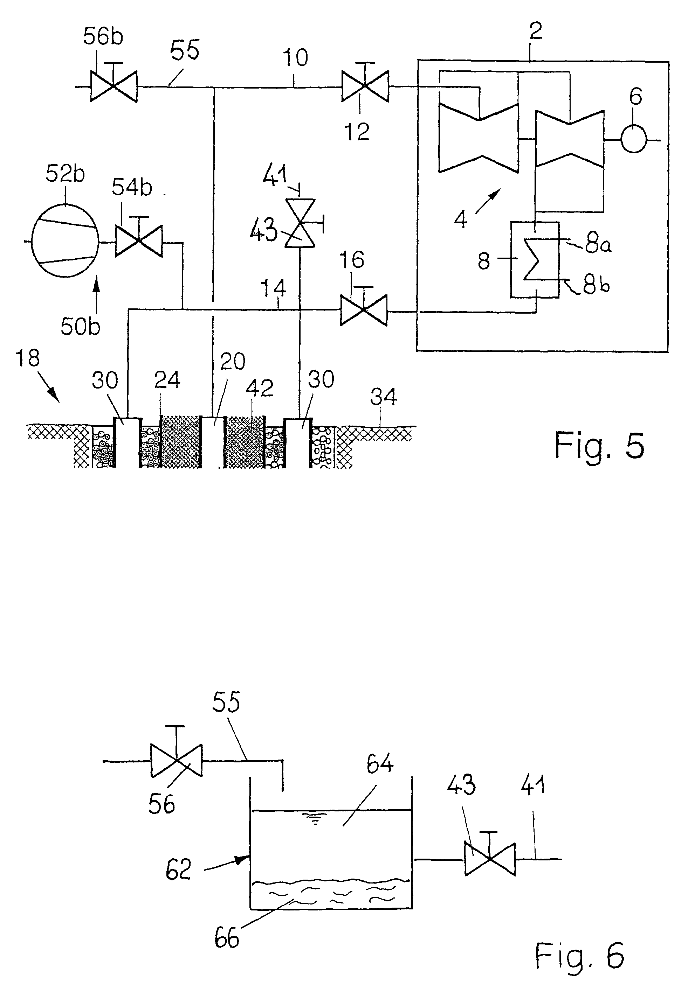

Die Figur 5 zeigt das oberirdische Leitungssystem der Anlage der Figur 4, wobei jedoch die zuschaltbare Druckmediumvorrichtung 50b nicht wie im Beispiel der Figuren 1 und 3 mit der Vorlaufleitung 10 sondern mit der Rücklaufleitung 14 im Bereich zwischen dem Erdenergietauscher 18 und dem Absperrventil 16 verbunden ist. Eine Ablassleitung 55 mit einem Ablassventil 56b ist mit der Vorlaufleitung 10 im Bereich zwischen dem Erdenergietauscher 18 und dem Absperrventil 12 verbunden. In diesem Falle wird zum Anfahren der Anlage bei geschlossenen Absperrventilen 12,16 in der Vorlaufleitung 10 und der Rücklaufleitung 14 mindestens ein Rücklaufrohr 30 und das Vorlaufrohr 20 mittels der Druckpumpenanlage 50b bei geöffnetem Anschlussventil 54b entwässert oder mit heissem Wasser gefüllt, wobei das ausgedrückte Kreislaufwasser über das offene Ablassventil 56b und die Ablassleitung 55 abläuft. Sobald der Vorgang beendet ist, müssen das Ablassventil 56b und das Anschlussventil 54b geschlossen werden. Durch Öffnen des Absperrventils 12 der Vorlaufleitung 10 kann entstandener Dampf zum Energietauscher 2 geleitet werden. Das zur Dampferzeugung erforderliche Kreislaufwasser wird durch Öffnen des Absperrventils 16 über die Rücklaufleitung 14 und die Rücklaufrohre 30, gegebenenfalls unter zeitweiser Zwischenschaltung einer Druckpumpe (nicht dargestellt), und/oder aus dem Erdkörper im unteren Bereich des Bohrloches und/oder über eine an die Rücklaufleitung 14 über ein Absperrventil 43 angeschlossene Zuleitung 41 zur Verfügung gestellt.

Bei solchen Anlagen wird das über das Ablassventil 56,56a,56b und die Ablassleitung 55 aus dem Erdenergietauscher 18 beim Anfahren der Anlage ausgepresste Kreislaufwasser vorzugsweise nicht an die Umgebung abgelassen sondern gemäss dem Ausführungsbeispiel der Figur 6 in einem Auffangbecken 62 gesammelt. Dort kann das Kreislaufwasser 64 gereinigt, zum Beispiel von Schlamm 66 befreit und entmineralisiert werden und im Bedarfsfalle über die Zuleitung 41 und das Absperrventil 43 dem Kreislaufprozess erneut zugeführt werden. Das Auffangbecken 62 kann auch generell zum Aufbereiten wie Reinigen, Entmineralisieren usw. des Kreislaufwassers dienen, wenn Messungen ergeben sollten, dass dieses für den Kreislaufprozess zu stark verunreinigt sein sollte. Dadurch wird eine Umweltbelastung mit dem ausgepressten allenfalls verunreinigten Kreislaufwasser vermieden. Durch die Reinigung und allenfalls Aufbereitung des ausgepressten Kreislaufwassers kann dem Kreislaufprozess optimal eingestelltes Wasser zugeführt werden, wodurch einerseits die Anlage selbst vor Schaden insbesondere Korrosion und andererseits der den Erdenergietauscher 18 umgebende Erdkörper vor Schäden durch Verunreinigungen bewahrt werden.

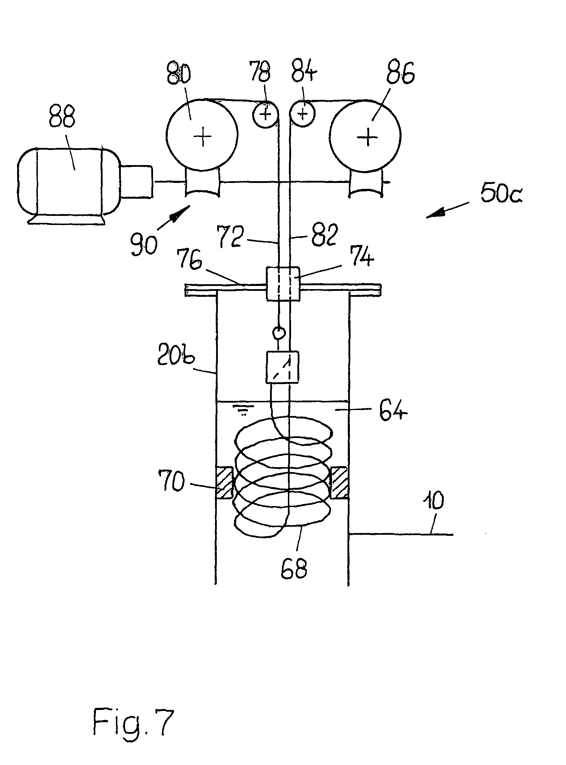

Die Figur 7 zeigt ein weiteres Ausführungsbeispiel einer Druckmediumvorrichtung 50c, welche anstelle von Druckmedium wie Druckluft oder Druckwasser der Druckpumpenanlagen der Ausführungsbeispiele der Figuren 1 bis 4 das Kreislaufwasser 64 im Vorlaufrohr 20b verdampft und den Dampf als Druckmedium zum Austreiben des Kreislaufwassers 64 aus dem Vorlaufrohr 20b verwendet. Die Druckmediumvorrichtung enthält einen Tauchsieder 68, der in das Kreislaufwasser 64 des Vorlaufrohres 20b eintaucht und mittels seitlicher Führungselemente 70 im Vorlaufrohr geführt und zentriert ist. Der Tauchsieder 68 hängt an einem Stahlseil 72, das durch eine Druckschleuse 74 in einem Abschlussdeckel 76 des Vorlaufrohres 20b nach aussen und über eine Umlenkrolle 78 zu einer Winde 80 geführt ist. Analog ist auch eine elektrische Zuleitung 82 des Tauchsieders 68 durch die Druckschleuse 74 nach aussen und über eine Umlenkrolle 84 zu einer Winde 86 geführt. Beide Winden 80,86 werden von einem gemeinsamen Antriebsmotor 88 und einem gemeinsamen Getriebe 90 gegenläufig angetrieben. Der Tauchsieder 68 kann mittels der Winden 80,86 entsprechend der fortschreitenden Verdampfung und dem fortschreitenden Verdrängen des Kreislaufwassers dem Wasserspiegel des Kreislaufwassers solange nachgefahren werden, bis die Dampferzeugung im Erdenergietauscher einsetzt und der Kreislaufprozess in Gang kommt. Dann kann der Tauchsieder 68 mittels der Winden 80,86 in die Ausgangsposition zurückgeholt werden.

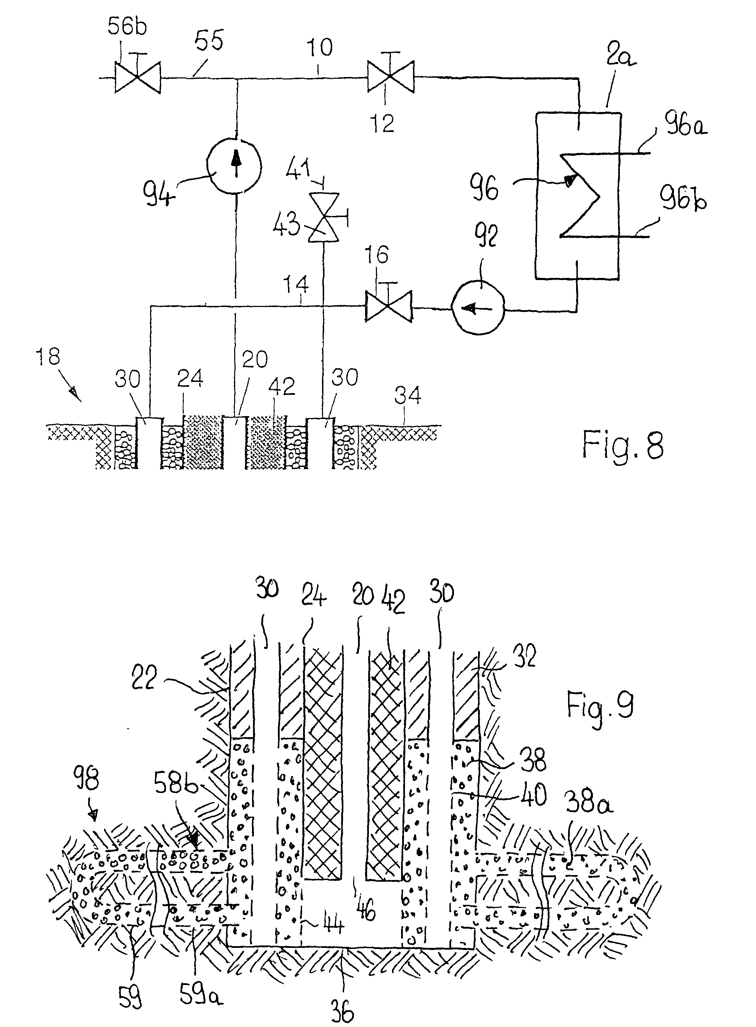

Die Figur 8 zeigt das oberirdische Leitungssystem der Anlage der Figur 5, wobei jedoch anstelle der zuschaltbaren Druckmediumvorrichtung 50b der Figur 5 in der Rücklaufleitung 14 und allenfalls in der Vorlaufleitung 10 eine Umwälzpumpe 92 und 94 angeordnet sind. Eine Ablassleitung 55 mit einem Ablassventil 56b ist wiederum mit der Vorlaufleitung 10 und zwar nach der Umwälzpumpe 94 verbunden. Ferner ist an die Rücklaufleitung 14 wiederum eine Zuleitung 41 mit einem Absperrventil 43 angeschlossen. Als Energietauscher 2a dient ein geschlossenes System, das die Anlage mit einem zweiten Kreislauf 96 mit Vorlauf 96a und Rücklauf 96b verbindet, der zu einem oder mehreren Energieverbrauchern wie Turbinen (beispielsweise für Stromgeneratoren), Heizungen und dergleichen führen. In diesem Falle können die Absperrventilen 12, 16 in der Vorlaufleitung 10 und der Rücklaufleitung 14 entfallen. Zum Anfahren der Anlage werden die Umwälzpumpen 92,94 eingeschaltet und das Kreislaufwasser im System solange im Kreislauf geführt, bis es sich derart erwärmt hat, dass beim Ablassen einer Teilmenge des Kreislaufwassers über die Ablassleitung 55 und dem damit verbundenen Druckabbau im Kreislauf Wasserdampf entsteht und der Kreislauf selbsttätig wird, sodass die Umwälzpumpen 92,94 abgeschaltet werden können.

Die Figur 9 zeigt den untersten Bereich des Bohrloches 22 analog dem Beispiel der Figur 1, wobei die seitlichen Ablenkungsbohrungen 58b nicht in Richtung des Bohrloches 22 sondern im wesentlichen radial dazu verlaufen. Die Ablenkungsbohrungen 58b treten oberhalb der Bohrlochsohle 36 radial aus dem Bohrloch 22 aus, bilden eine Schlaufe 98 und treten nahe der Bohrlochsohle 36 wieder in das Bohrloch 22 ein. Die Ablenkungsbohrung 58b ist wiederum mit einem Rohr 59 mit Löchern 59a ausgekleidet und mit einer porösen Füllung 38a versehen. Durch diese Ausgestaltung wird eine grosse Wärmetauscherfläche in einer Erdtiefe mit hoher Temperatur erreicht.

### Bezugszeichenliste

- 2: Energietauscher
- 4: mehrstufige Dampfturbine
- 6: Stromgenerator
- 8: Energieverbraucher
- 8a: Vorlauf
- 8b: Rücklauf
- 10: Vorlaufleitung
- 12: regulierbares Absperrventil
- 14: Rücklaufleitung
- 16: regulierbares Absperrventil
- 18: Erdenergietauscher
- 20,20a,20b: Vorlaufrohr
- 22: Bohrloch
- 24: Trennrohr
- 26: Bohrlochwandung
- 28: Rücklaufbereich
- 30: Rücklaufrohr
- 32: dichtender Bereich
- 34: Erdoberfläche
- 36: Bohrlochsohle
- 38,38a: poröse Füllung
- 40: Durchtrittsöffnungen im Rücklaufrohr
- 41: Zuleitung
- 42: Isoliermaterial
- 43: Absperrventil
- 44,44a: Durchtrittsöffnungen im Trennrohr
- 46,46a: untere Eintrittsöffnung des Vorlaufrohres
- 48: Absperrventil
- 50,50a,50b,50c: zuschaltbare Druckmediumvorrichtung (Druckpumpenanlage)
- 52,52a,52b: Druckpumpe
- 54,54a,54b: regulierbares Anschlussventil
- 55: Ablassleitung
- 56,56a,56b: Ablassventil
- 58: seitliche Ablenkungsbohrung
- 58a: seitliche Ablenkungsbohrung
- 58b: seitliche Ablenkungsbohrung
- 59: Rohr
- 59a: Loch
- 60: Ringbereich
- 62: Auffangbecken
- 64: Kreislaufwasser
- 66: Schlamm
- 68: Tauchsieder
- 70: Führungselement
- 72: Stahlseil
- 74: Druckschleuse
- 76: Abschlussdeckel
- 78: Umlenkrolle
- 80: Winde
- 82: elektrische Zuleitung
- 84: Umlenkrolle
- 86: Winde
- 88: Antriebsmotor
- 90: Getriebe
- 92: Umwälzpumpe
- 94: Umwälzpumpe
- 96: zweiter Kreislauf
- 96a: Vorlauf
- 96b: Rücklauf
- 98: Schlaufe

## Patentansprüche

1. Verfahren zum Austausch von Energie zwischen Erdkörper und einem Energietauscher (2,2a) insbesondere zur Stromerzeugung, wobei der Energietauscher (2,2a) über eine Vorlaufleitung (10) für Wasserdampf und eine Rücklaufleitung (14) für Kreislaufwasser mit einem Erdenergietauscher (18) in einem Kreislaufprozess verbunden ist, der bis in eine Wasserdampf erzeugende Tiefe des Erdkörpers reicht, wobei man für den Vorlauf und den Rücklauf im Erdkörper ein gemeinsames Bohrloch (22) verwendet, **dadurch gekennzeichnet, dass** man in dem Bohrloch (22) mindestens ein wärmeisoliertes Vorlaufrohr (20,20a,20b) mit einem Trennrohr (24) umgibt, an das sich radial nach aussen ein Rücklaufbereich (28) für Kreislaufwasser anschliesst, der mindestens ein mit der Rücklaufleitung (14) in Verbindung stehendes Rücklaufrohr (30) und mindestens im unteren Bereich eine poröse Füllung (38) enthält und der mindestens an der Sohle des Bohrloches (22) über eine oder mehrere Durchtrittsöffnungen (44,44a) im Trennrohr (24) mit einer unteren Eintrittsöffnung (46,46a) des Vorlaufrohres (20,20a,20b) in Verbindung steht.

2. Verfahren nach Anspruch 1, **dadurch gekennzeichnet, dass** man den Kreislaufprozess und damit die Dampferzeugung mittels mindestens einer Umwälzpumpe (92,94) in Gang setzt.

3. Verfahren nach Anspruch 1, **dadurch gekennzeichnet, dass** man zum Anfahren des Kreislaufprozesses eine im Vorlaufrohr (20,20a,20b) befindliche Wassersäule mittels Druckmedium soweit auspresst bis Wasserdampf entsteht und mit vorbestimmten Nennwerten am Energietauscher (2,2a) vorhanden ist.

4. Verfahren nach Anspruch 3 **dadurch gekennzeichnet, dass** man das Druckmedium im oberen Bereich des Vorlaufrohres (20,20b) einbringt.

5. Verfahren nach Anspruch 3, **dadurch gekennzeichnet, dass** man das Druckmedium im oberen Bereich des Rücklaufrohres (30) einbringt.

6. Verfahren nach einem der Ansprüche 3 bis 5, **dadurch gekennzeichnet, dass** man ein vorgewärmtes Druckmedium verwendet.

7. Verfahren nach einem der Ansprüche 3 bis 6, **dadurch gekennzeichnet, dass** man als Druckmedium Druckluft verwendet.

8. Verfahren nach einem der Ansprüche 3 bis 6, **dadurch gekennzeichnet, dass** man als Druckmedium Wasserdampf verwendet, den man vorzugsweise durch fortlaufendes Verdampfen der Wassersäule im Vorlaufrohr (20b) mittels eines Tauchsieders (68) erzeugt.

9. Verfahren nach einem der Ansprüche 3 bis 5, **dadurch gekennzeichnet, dass** man als Druckmedium Druckwasser verwendet.

10. Verfahren nach einem der Ansprüche 3 bis 6, **dadurch gekennzeichnet, dass** man ein beim Anfahren des Kreislaufprozesses aus dem Vorlaufrohr (20,20a,20b) aus dem Kreislaufprozess austretendes Kreislaufwasser (64) in einem Auffangbecken (62) auffängt und vorzugsweise aufbereitet und zum bedarfsweisen Nachfüllen des Kreislaufprozesses verwendet.

11. Verfahren nach einem der Ansprüche 1 bis 10, **dadurch gekennzeichnet, dass** man dem Rücklaufrohr (30) Kreislaufwasser mit einer Temperatur von unter 100° C, vorzugsweise auf 20° bis 30° C zuführt.

12. Verfahren nach einem der Ansprüche 1 bis 11, **dadurch gekennzeichnet, dass** man dem Energietauscher (2,2a) Wasserdampf mit einer Temperatur von mindestens 100°C, vorzugsweise 350° bis 370°C zuführt.

13. Verfahren nach einem der Ansprüche 1 bis 12, **dadurch gekennzeichnet, dass** man den sich entwickelnden Wasserdampfdruck kompensiert, indem man eine sich über dem Wasserdampf im Rücklaufbereich (28) befindliche Wassersäule nach unten presst, um Temperatur und Druck anzuheben, so dass sich im Vorlaufbereich (20,20a,20b,24) beispielsweise bei 7500 bis 12000 m Tiefe Wasserdampf mit einem Druck von beispielsweise 50 bis 60 bar ausbildet, der über den vorzugsweise thermisch isolierten Vorlaufbereich (20,20a,20b,24) zum Energietauscher (2,2a) strömt.

14. Anlage zur Durchführung des Verfahrens nach einem der Ansprüche 1 bis 13, **dadurch gekennzeichnet, dass** der Energietauscher (2,2a) über eine Vorlaufleitung (10) und eine Rücklaufleitung (14) für Kreislaufwasser mit einem Erdenergietauscher (18) verbunden ist, der in einem Bohrloch (22) mindestens ein wärmeisoliertes Vorlaufrohr (20,20a,20b) aufweist, wobei das Vorlaufrohr (20,20a,20b) im Bohrloch (22) von einem Trennrohr (24) umgeben ist, an das sich radial nach aussen ein Rücklaufbereich (28) für Kreislaufwasser anschliesst, der mindestens ein mit der Rücklaufleitung (14) in Verbindung stehendes Rücklaufrohr (30) und mindestens im unteren Bereich eine poröse Füllung (38) enthält und mindestens an der Sohle des Bohrloches (22) über eine oder mehrere Durchtrittsöffnungen (44,44a) im Trennrohr (24) mit einer unteren Eintrittsöffnung (46,46a) des Vorlaufrohres (20,20a,20b) in Verbindung steht.

15. Anlage nach Anspruch 14, **dadurch gekennzeichnet, dass** in der Rücklaufleitung (14) und/oder in der Vorlaufleitung (10) eine Umwälzpumpe (92,94) angeordnet ist.

16. Anlage nach Anspruch 14, **dadurch gekennzeichnet, dass** die Vorlaufleitung (10) und die Rücklaufleitung (14) jeweils mit einem regulierbaren Absperrventil (12,16) versehen sind und entweder an der Vorlaufleitung (10) zwischen dem Absperrventil (12) und dem Erdenergietauscher (18) oder an der Rücklaufleitung (14) zwischen dem Absperrventil (16) und dem Erdenergietauscher (18) eine zuschaltbare Vorrichtung (50a,50b,50c) zur Erzeugung eines Druckmediums zum Austreiben des Kreislaufwassers aus dem Vorlaufrohr (20,20a,20b) und damit zum Auslösen der Wasserdampf-Erzeugung und -Förderung angeschlossen ist.

17. Analge nach Anspruch 16, **dadurch gekennzeichnet, dass** die Druckmediumvorrichtung als Druckpumpe (50a,50b) ausgebildet ist.

18. Analge nach Anspruch 16, **dadurch gekennzeichnet, dass** die Druckmediumvorrichtung als in das Vorlaufrohr absenkbarer Tauchsieder (50c) ausgebildet ist.

19. Anlage nach einem der Ansprüche 14 bis 18, **dadurch gekennzeichnet, dass** oberhalb der Erdoberfläche (34) Mittel zum Ablassen von Kreislaufwasser aus dem Vorlaufrohr (20,20a,20b) vorhanden sind.

20. Anlage nach Ansprüchen 16 und 19, **dadurch gekennzeichnet, dass** die Ablassmittel ein in der Rücklaufleitung (14) zwischen dem Erdenergietauscher (18) und dem Absperrventil (16) angeordnetes Ablassventil (56a) aufweisen.

21. Anlage nach Ansprüchen 16 und 19, **dadurch gekennzeichnet, dass** die Ablassmittel ein in der Vorlaufleitung (10) zwischen dem Erdenergietauscher (18) und dem Absperrventil (12) angeordnetes Ablassventil (56b) aufweisen.

22. Anlage nach einem der Ansprüche 19 bis 21, **dadurch gekennzeichnet, dass** die Ablassmittel ein Auffangbecken (62) aufweisen, das vorzugsweise eine mit der Rücklaufleitung (14) verbundene Zuleitung (41) enthält.

23. , Analge nach einem der Ansprüche 14 bis 22, **dadurch gekennzeichnet, dass** an der Rücklaufleitung (14) über ein Absperrventil (43) eine Zuleitung (41) für Wasser angeordnet ist.

24. Anlage nach einem der Ansprüche 14 bis 23, **dadurch gekennzeichnet, dass** innerhalb des Trennrohres (24) mindestens ein weiteres Vorlaufrohr (20a) angeordnet ist, das erdseitig mit dem ersten Vorlaufrohr (20) kommuniziert und an der Erdoberfläche (34) über ein Absperrventil (48) mit dem ersten Vorlaufrohr (20) verbunden ist und ein Ablassventil (56) zum Ablassen des über das erste Vorlaufrohr (20) durch das zweite Vorlaufrohr (20a) mittels der Druckmediumvorrichtung (50) austreibbaren Kreislaufwassers aufweist.

25. Anlage nach einem der Ansprüche 14 bis 24, **dadurch gekennzeichnet, dass** der Bereich zwischen dem Vorlaufrohr (20,20a,20b) und dem Trennrohr (24) mittels eines Isoliermaterials (42) ausgefüllt ist.

26. Anlage nach einem der Ansprüche 14 bis 25, **dadurch gekennzeichnet, dass** im Ringbereich (60) zwischen Trennrohr (24) und Bohrlochwandung (26) mindestens zwei, vorzugsweise mehrere, um das Trennrohr (24) verteilte Rücklaufrohre (30) angeordnet sind.

27. Anlage nach einem der Ansprüche 14 bis 26, **dadurch gekennzeichnet, dass** der das Rücklaufrohr (30) aufnehmende Bohrlochbereich im oberen Bereich (32), vorzugsweise 1000 bis 2500 m von der Erdoberfläche (34) aus, dichtend ausgebildet und im unteren Bereich bis zur Bohrlochsohle (36) mit der porösen Füllung (38) versehen ist, wobei die Wandung des Rücklaufrohres (30) im Bereich der porösen Füllung (38) mit Durchtrittsöffnungen (40) versehen ist.

28. Anlage nach einem der Ansprüche 14 bis 27, **dadurch gekennzeichnet, dass** das Vorlaufrohr (20,20a,20b), vorzugsweise 400 m, oberhalb der Bohrlochsohle (36) endigt und das Trennrohr (24) in diesem Bereich mit Durchtrittsöffnungen (44) versehen ist.

29. Anlage nach einem der Ansprüche 14 bis 28 **dadurch gekennzeichnet, dass** das Bohrloch (22) eine Tiefe T von 2500 bis 12000 m aufweist.

30. Anlage nach einem der Ansprüche 14 bis 29, **dadurch gekennzeichnet, dass** das Bohrloch (22) mindestens eine seitliche Ablenkungsbohrungen (58,58a,58b) aufweist, die vorzugsweise im Bereich der Durchtrittsöffnung (44,44a) des Trennrohres (24) wieder in das Bohrloch (22) mündet.

31. Anlage nach Anspruch 30, **dadurch gekennzeichnet, dass** die Ablenkungsbohrung (58a) im wesentlichen in Richtung des Bohrloches (22) verläuft.

32. Anlage nach Anspruch 30, **dadurch gekennzeichnet, dass** die Ablenkungsbohrung (58b) im wesentlichen radial zum Bohrloch (22) verläuft.

33. Anlage nach einem der Ansprüche 14 bis 32, **dadurch gekennzeichnet, dass** der Energietauscher (2) eine vorzugsweise mehrstufige Turbine (4) aufweist, die mit einem Stromgenerator (6) verbunden ist, wobei der Turbine (4) vorzugsweise ein weiterer Energieverbraucher (8) nachgeschaltet ist.

34. Anlage nach einem der Ansprüche 14 bis 32, **dadurch gekennzeichnet, dass** der Energietauscher (2a) den Erdkreislaufprozess mit einem zweiten Kreislaufprozess (96) verbindet, der vorzugsweise eine mehrstufige Turbine mit einem Stromgenerator enthält.

35. Anlage nach Anspruch 33 oder 34, **dadurch gekennzeichnet, dass** die Turbine (4) nach dem ORC-Prozess arbeitend ausgebildet ist.

## Claims

1. A method for exchanging energy between the body of the earth and an energy exchanger (2, 2a), more particularly for current generation, the energy exchanger (2, 2a) being connected, in a circulation process, via a forward-flow line (10) for steam and a return-flow line (14) for circulatory water, to an earth energy exchanger (18) which extends to a steam-generating depth of the body of the earth, use being made of a common bore hole (22) for forward flow and return flow in the body of the earth, **characterized in that**, in the bore hole (22), at least one heat-insulated forward-flow pipe (20, 20a, 20b) is surrounded by a separation pipe (24) which has adjoining it in radial outward direction a return-flow region (28) for circulatory water which contains at least one return-flow pipe (30) connected to the return-flow line (14) and, at least in the lower region, a porous filling (38) and which communicates with a lower inlet orifice (46, 46a) of the forward-flow pipe (20, 20a, 20b) at least at the floor of the bore hole (22) via one or more passage orifices (44, 44a) in the separation pipe (24).

2. The method as claimed in claim 1, **characterized in that** the circulation process and consequently steam generation are set in motion by means of at least one circulation pump (92, 94).

3. The method as claimed in claim 1, **characterized in that**, to start up the circulation process, a water column located in the forward-flow pipe (20, 20a, 20b) is forced out by means of pressure medium, until steam is produced and is present with predetermined nominal values at the energy exchanger (2, 2a).

4. The method as claimed in claim 3, **characterized in that** the pressure medium is introduced in the upper region of the forward-flow pipe (20, 20b).

5. The method as claimed in claim 3, **characterized in that** the pressure medium is introduced in the upper region of the return-flow pipe (30).

6. The method as claimed in one of claims 3 to 5, **characterized in that** a preheated pressure medium is used.

7. The method as claimed in one of claims 3 to 6, **characterized in that** the pressure medium used is compressed air.

8. The method as claimed in one of claims 3 to 6, **characterized in that** the pressure medium used is steam which is generated preferably by the continuous evaporation of the water column in the forward-flow pipe (20b) by means of an immersion heater (68).

9. The method as claimed in one of claims 3 to 5, **characterized in that** the pressure medium used is pressurized water.

10. The method as claimed in one of claims 3 to 6, **characterized in that** a circulatory water (64) which emerges from the circulation process out of the forward-flow pipe (20, 20a, 20b) during the start-up of the circulation process is collected in a collecting tank (62) and is preferably treated and used for topping up the circulation process as required.

11. The method as claimed in one of claims 1 to 10, **characterized in that** circulatory water having a temperature of below 100°C, preferably of 20° to 30°C, is supplied to the return-flow pipe (30).

12. The method as claimed in one of claims 1 to 11, **characterized in that** steam with a temperature of at least 100°C, preferably 350° to 370°C, is supplied to the energy exchanger (2, 2a).

13. The method as claimed in one of claims 1 to 12, **characterized in that** the steam pressure which develops is compensated by forcing downward a water column located above the steam in the return-flow region (28) in order to raise the temperature and pressure, so that in the forward-flow region (20, 20a, 20b, 24), for example at a depth of 7500 to 12 000 m, steam with a pressure of, for example, 50 to 60 bar is formed, which flows via the preferably thermally insulated forward-flow region (20, 20a, 20b, 24) to the energy exchanger (2, 2a).

14. A system for carrying out the method as claimed in one of claims 1 to 13, **characterized in that** the energy exchanger (2, 2a) is connected via a forward-flow line (10) and a return-flow line (14) for circulatory water to an earth energy exchanger (18) which has at least one heat-insulated forward-flow pipe (20, 20a, 20b) in a bore hole (22), the forward-flow pipe (20, 20a, 20b) being surrounded in the bore hole (22) by a separation pipe (24) which has adjoining it in radial outward direction a return-flow region (28) for circulatory water which contains at least one return-flow pipe (30) connected to the return-flow line (14) and, at least in the lower region, a porous filling (38) and which is connected to a lower inlet orifice (46, 46a) of the forward-flow pipe (20, 20a, 20b) at least at the floor of the bore hole (22) via one or more passage orifices (44, 44a) in the separation pipe (24).

15. The system as claimed in claim 14, **characterized in that** a circulation pump (92, 94) is arranged in the return-flow line (14) and/or in the forward-flow line (10).

16. The system as claimed in claim 14, **characterized in that** the forward-flow line (10) and the return-flow line (14) each are provided with an adjustable shut-off valve (12, 16), and a connectable device (50a, 50b, 50c) for generating a pressure medium for expelling the circulatory water out of the forward-flow pipe (20, 20a, 20b) and consequently for triggering steam generation and steam conveyance is connected either to the forward-flow line (10) between the shut-off valve (12) and the earth energy exchanger (18) or to the return-flow line (14) between the shut-off valve (16) and the earth energy exchanger (18).

17. The system as claimed in claim 16, **characterized in that** the pressure medium device is designed as a pressure pump (50a, 50b).

18. The system as claimed in claim 16, **characterized in that** the pressure medium device is designed as an immersion heater (50c) capable of being lowered into the forward-flow pipe.

19. The system as claimed in one of claims 14 to 18, **characterized in that** means for the discharge of circulatory water out of the forward-flow pipe (20, 20a, 20b) are present above the earth's surface (34).

20. The system as claimed in claims 16 and 19, **characterized in that** the discharge means have a discharge valve (56a) arranged in the return-flow line (14) between the earth energy exchanger (18) and the shut-off valve (16).

21. The system as claimed in claims 16 and 19, **characterized in that** the discharge means have a discharge valve (56b) arranged in the forward-flow line (10) between the earth energy exchanger (18) and the shut-off valve (12).

22. The system as claimed in one of claims 19 to 21, **characterized in that** the discharge means have a collecting tank (62) which contains preferably a supply line (41) connected to the return-flow line (14).

23. The system as claimed in one of claims 14 to 22, **characterized in that** a supply line (41) for water is arranged on the return-flow line (14) via a shut-off valve (43).

24. The system as claimed in one of claims 14 to 23, **characterized in that** the separation pipe (24) has arranged within it at least one further forward-flow pipe (20a) which communicates on the earth side with the first forward-flow pipe (20) and which is connected to the first forward-flow pipe (20) at the earth's surface (34) via a shut-off valve (48) and has a discharge valve (56) for the discharge of the circulatory water capable of being expelled via the first forward-flow pipe (20) through the second forward-flow pipe (20a) by means of the pressure medium device (50).

25. The system as claimed in one of claims 14 to 24, **characterized in that** the region between the forward-flow pipe (20, 20a, 20b) and the separation pipe (24) is filled by means of an insulating material (42).

26. The system as claimed in one of claims 14 to 25, **characterized in that** at least two, preferably a plurality of, return-flow pipes (30) distributed around the separation pipe (24) are arranged in the annular region (60) between the separation pipe (24) and the bore hole wall (26).

27. The system as claimed in one of claims 14 to 26, **characterized in that** the bore hole region receiving the return-flow pipe (30) is designed to be sealing in the upper region (32), preferably at a distance of 1000 to 2500 m from the earth's surface (34), and is provided with the porous filling (38) in the lower region down to the bore hole floor (36), the wall of the return-flow pipe (30) being provided with passage orifices (40) in the region of the porous filling (38).

28. The system as claimed in one of claims 14 to 27, **characterized in that** the forward-flow pipe (20, 20a, 20b) terminates above, preferably 400 m above, the bore hole floor (36), and the separation pipe (24) is provided with passage orifices (44) in this region.

29. The system as claimed in one of claims 14 to 28, **characterized in that** the bore hole (22) has a depth T of 2500 to 12 000 m.

30. The system as claimed in one of claims 14 to 29, **characterized in that** the bore hole (22) has at least one lateral diversion bore (58, 58a, 58b) which issues into the bore hole (22) again preferably in the region of the passage orifice (44, 44a) of the separation pipe (24).

31. The system as claimed in claim 30, **characterized in that** the diversion bore (58a) runs essentially towards the bore hole (22).

32. The system as claimed in claim 30, **characterized in that** the diversion bore (58b) runs essentially in radial direction of the bore hole (22).

33. The system as claimed in one of claims 14 to 32, **characterized in that** the energy exchanger (2) has a preferably multistage turbine (4) which is connected to a current generator (6), the turbine (4) preferably being followed by a further energy consumer (8) connected thereto.

34. The system as claimed in one of claims 14 to 32, **characterized in that** the energy exchanger (2a) connects the earth circulation process to a second circulation process (96) which preferably contains a multistage turbine with a current generator.

35. The system as claimed in claim 33 or 34, **characterized in that** the turbine (4) is designed to operate according to the ORC process.

## Revendications

1. Procédé d'échange d'énergie entre la terre et un échangeur d'énergie (2, 2a), plus particulièrement en vue de la production de courant, l'échangeur d'énergie (2, 2a) communiquant, dans un processus de circulation, en passant par une conduite d'aller (10) pour de la vapeur et une conduite de retour (14) pour de l'eau du circuit, avec un échangeur d'énergie terrestre (18) qui s'étend jusqu'à une profondeur terrestre génératrice de vapeur d'eau, un trou de forage commun (22) étant utilisé pour l'aller et le retour dans la terre, **caractérisé en ce que** dans le trou de forage (22) au moins un tube d'aller isolé thermiquement (20, 20a, 20b) est entouré d'un tube de séparation (24) auquel se joint en direction radiale vers l'extérieur une région d'écoulement de retour (28) pour de l'eau du circuit qui comporte au moins un tube de retour (30) communiquant avec la conduite de retour (14) et, au moins dans la région inférieure, un remplissage poreux (38) et qui communique au moins au fond du trou de forage (22) avec un orifice d'entrée inférieur (46, 46a) du tube d'aller (20, 20a, 20b) à travers un ou plusieurs orifices de passage (44, 44a) pratiqués dans le tube de séparation (24).

2. Procédé selon la revendication 1, **caractérisé en ce que** l'on met en route le processus de circulation et par conséquent la production de vapeur au moyen d'au moins une pompe de circulation (92, 94).

3. Procédé selon la revendication 1, **caractérisé en ce que** pour mettre en route le processus de circulation l'on exprime au moyen d'un milieu de pressurisation une colonne d'eau située dans le tube d'aller (20, 20a, 20b) jusqu'à ce qu'il se produise de la vapeur qui se présente à l'échangeur d'énergie (2, 2a) avec des valeurs nominales prédéterminées.

4. Procédé selon la revendication 3, **caractérisé en ce que** l'on introduit le milieu de pressurisation dans la région supérieure du tube d'aller (20, 20b).

5. Procédé selon la revendication 3, **caractérisé en ce que** l'on introduit le milieu de pressurisation dans la région supérieure du tube de retour (30).

6. Procédé selon l'une des revendications 3 à 5, **caractérisé en ce que** l'on utilise un milieu de pressurisation préchauffé.

7. Procédé selon l'une des revendications 3 à 6, **caractérisé en ce que** l'on utilise comme milieu de pressurisation de l'air comprimé.

8. Procédé selon l'une des revendications 3 à 6, **caractérisé en ce que** l'on utilise comme milieu de pressurisation de la vapeur d'eau produite de préférence par évaporation continue de la colonne d'eau située dans le tube d'aller (20b) au moyen d'un thermoplongeur (68).

9. Procédé selon l'une des revendications 3 à 5, **caractérisé en ce que** l'on utilise comme milieu de pressurisation de l'eau sous pression.

10. Procédé selon l'une des revendications 3 à 6, **caractérisé en ce qu'**une eau circulante (64) émergeant du processus de circulation par le tube d'aller (20, 20a, 20b) lors de la mise en route du processus de circulation est recueillie dans un bassin de réception (62) et est de préférence traitée et utilisée pour refaire à la demande le plein du processus de circulation.

11. Procédé selon l'une des revendications 1 à 10, **caractérisé en ce que** l'on amène au tube de retour (30) de l'eau du circuit à une température inférieure à 100°C, de préférence de 20° à 30°C.

12. Procédé selon l'une des revendications 1 à 11, **caractérisé en ce que** l'on amène à l'échangeur d'énergie (2, 2a) de la vapeur à une température d'au moins 100°C, de préférence de 350° à 370°C.

13. Procédé selon l'une des revendications 1 à 12, **caractérisé en ce que** l'on compense la pression de vapeur d'eau qui se développe en comprimant vers le bas une colonne d'eau située au-dessus de la vapeur dans la région d'écoulement de retour (28) afin d'élever la température et la pression, de façon qu'il se forme dans la région d'écoulement d'aller (20, 20a, 20b, 24), par exemple à une profondeur de 7500 à 12000 m, de la vapeur à une pression par exemple de 50 à 60 bar qui coule vers l'échangeur d'énergie (2, 2a) en passant par la région d'aller de préférence isolée thermiquement (20, 20a, 20b, 24).

14. Dispositif de mise en oeuvre du procédé selon l'une des revendications 1 à 13, **caractérisé en ce que** l'échangeur d'énergie (2, 2a) est relié, à travers une conduite d'aller (10) et une conduite de retour (14) pour de l'eau du circuit, à un échangeur d'énergie terrestre (18) qui présente, dans un trou de forage (22), au moins un tube d'aller isolé thermiquement (20, 20a, 20b), le tube d'aller (20, 20a, 20b) étant entouré dans le trou de forage (22) d'un tube de séparation (24) auquel se joint en direction radiale vers l'extérieur une région d'écoulement de retour (28) pour l'eau du circuit qui comporte au moins un tube de retour (30) communiquant avec la conduite de retour (14) et, au moins dans la région inférieure, un remplissage poreux (38) et qui communique au moins au fond du trou de forage (22) avec un orifice d'entrée inférieur (46, 46a) du tube d'aller (20, 20a, 20b) à travers un ou plusieurs orifices de passage (44, 44a) pratiqués dans le tube de séparation (24).

15. Dispositif selon la revendication 14, **caractérisé en ce qu'**une pompe de circulation (92, 94) est disposée dans la conduite de retour (14) et/ou dans la conduite d'aller (10).

16. Dispositif selon la revendication 14, **caractérisé en ce que** la conduite d'aller (10) et la conduite de retour (14) sont chacune pourvues d'une vanne d'arrêt réglable (12, 16) et qu'un dispositif connectable (50a, 50b, 50c) destiné à produire un milieu de pressurisation pour chasser du tube d'aller (20, 20a, 20b) l'eau du circuit et ainsi déclencher la production de vapeur et le transport de vapeur est relié soit à la conduite d'aller (10) entre la vanne d'arrêt (12) et l'échangeur d'énergie (18), soit à la conduite de retour (14) entre la vanne d'arrêt (16) et l'échangeur d'énergie (18).

17. Dispositif selon la revendication 16, **caractérisé en ce que** le dispositif de milieu de pressurisation est réalisé sous forme d'une pompe de pressurisation (50a, 50b).

18. Dispositif selon la revendication 16, **caractérisé en ce que** le dispositif de milieu de pressurisation est réalisé sous forme d'un thermoplongeur (50c) susceptible d'être descendu dans le tube d'aller.

19. Dispositif selon l'une des revendications 14 à 18, **caractérisé en ce que** des moyens pour décharger de l'eau du circuit hors du tube d'aller (20, 20a, 20b) sont présents au-dessus de la surface terrestre (34).

20. Dispositif selon les revendications 16 et 19, **caractérisé en ce que** les moyens de décharge comportent une vanne de décharge (56a) disposée sur la conduite de retour (14) entre l'échangeur d'énergie terrestre (18) et la vanne d'arrêt (16).

21. Dispositif selon les revendications 16 et 19, **caractérisé en ce que** les moyens de décharge comportent une vanne de décharge (56b) disposée sur la conduite d'aller (10) entre l' échangeur d'énergie terrestre (18) et la vanne d'arrêt (12).

22. Dispositif selon l'une des revendications 19 à 21, **caractérisé en ce que** les moyens de décharge comportent un bassin de réception (62) qui contient de préférence une conduite d'amenée (41) reliée à la conduite de retour (14).

23. Dispositif selon l'une des revendications 14 à 22, **caractérisé en ce qu'**une conduite d'amenée (41) pour de l'eau est disposée sur la conduite de retour (14) en passant par une vanne d'arrêt (43).

24. Dispositif selon l'une des revendications 14 à 23, **caractérisé en ce qu'**à l'intérieur du tube de séparation (24) est disposé au moins un autre tube d'aller (20a) qui communique du côté terrestre avec le premier tube d'aller (20) et est relié, à la surface terrestre (34), en passant par une vanne d'arrêt (48) avec premier tube d'aller (20) et comporte une vanne de décharge (56) pour la décharge de l'eau du circuit susceptible d'être chassée en passant par le premier tube d'aller (20) et à travers le deuxième tube d'aller (20a) au moyen du dispositif de milieu de pressurisation (50).

25. Dispositif selon l'une des revendications 14 à 24, **caractérisé en ce que** la région située entre le tube d'aller (20, 20a, 20b) et le tube de séparation (24) est remplie au moyen d'un matériau isolant (42).

26. Dispositif selon l'une des revendications 14 à 25, **caractérisé en ce que** dans la région annulaire (60) située entre le tube de séparation (24) et la paroi du trou de forage (26) sont disposés au moins deux, de préférence une pluralité de tubes de retour (30) répartis autour du tube de séparation (24).

27. Dispositif selon l'une des revendications 14 à 26, **caractérisé en ce que** la région du trou de forage qui reçoit le tube de retour (30) est construite de façon à être étanche dans la région supérieure (32), de préférence à une distance de 1000 à 2500 m de la surface terrestre (34), et est pourvue du remplissage poreux (38) dans la région inférieure jusqu'au fond du trou de forage (36), la paroi du tube de retour (30) étant pourvue d'orifices de passage (40) dans la région du remplissage poreux (38).

28. Dispositif selon l'une des revendications 14 à 27, **caractérisé en ce que** le tube d'aller (20, 20a, 20b) se termine au-dessus, de préférence à 400 m au-dessus du fond du trou de forage (36) et que dans cette région le tube de séparation (24) est pourvu d'orifices de passage (44).

29. Dispositif selon l'une des revendications 14 à 28, **caractérisé en ce que** le trou de forage (22) présente une profondeur T de 2500 à 12000 m.

30. Dispositif selon l'une des revendications 14 à 29, **caractérisé en ce que** le trou de forage (22) comporte au moins un forage de dérivation latérale (58, 58a, 58b) qui débouche à nouveau dans le trou de forage (22) de préférence dans la région de l'orifice de passage (44, 44a) du tube de séparation (24).

31. Dispositif selon la revendication 30, **caractérisé en ce que** le forage de dérivation (58a) s'étend essentiellement en direction du trou de forage (22).

32. Dispositif selon la revendication 30, **caractérisé en ce que** le forage de dérivation (58b) s'étend essentiellement en direction radiale par rapport au trou de forage (22).

33. Dispositif selon l'une des revendications 14 à 32, **caractérisé en ce que** l'échangeur d'énergie (2) comporte une turbine de préférence à plusieurs étages (4) qui est reliée à un générateur de courant (6), la turbine (4) étant de préférence suivie d'un autre dispositif consommateur d'énergie (8) qui lui est connecté.

34. Dispositif selon l'une des revendications 14 à 32, **caractérisé en ce que** l'échangeur d'énergie (2a) relie le processus de circulation terrestre à un deuxième processus de circulation (96) qui contient de préférence une turbine à plusieurs étages avec un générateur de courant.

35. Dispositif selon la revendication 33 ou 34, **caractérisé en ce que** la turbine (4) est construite pour fonctionner selon le procédé ORC.
